# EUROPÄISCHE PATENTSCHRIFT

(11) **EP 1 985 794 B1**
(45) Veröffentlichungstag und Bekanntmachung des Hinweises auf die Patenterteilung: **10.04.2013**
(21) Anmeldenummer: 08007859.5
(22) Anmeldetag: 23.04.2008
(51) Int. Cl.: E21B 10/58, B23B 51/00

(54) **Hartmetallplatte für Gesteinsbohrer und Gesteinsbohrer**
Hard metal plate for rock drill and rock drill
Plaque en métal dur pour foret à pierre et foret à pierre

(30) Priorität: 27.04.2007 DE 102007020051
(43) Veröffentlichungstag der Anmeldung: 29.10.2008
(73) Patentinhaber: Irwin Industrial Tools GmbH, 85399 Hallbergmoos (DE)
(72) Erfinder: Pedersen, Hans, 7760 Hurup (DK); Sian, Kirpal-Singh, 89134 Blaustein (DE)
(74) Vertreter: Schmid, Nils T.F.

(56) Entgegenhaltungen:
- EP-A1- 0 891 832
- WO-A1-01/66902
- WO-A1-2005/061838
- DE-A1- 3 823 409
- US-A- 3 080 934

## Beschreibung

Die Erfindung betrifft eine Hartmetallplatte zum Einsetzen in einen an einem Ende eines Bohrschafts eines Gesteinsbohrers ausgebildeten Sitz. Die gattungsgemäße Hartmetallplatte soll eine im Wesentlichen quaderförmige Grundform mit zwei sich in Axialrichtung des Bohrerschafts erstreckende und gegenüberliegende, insbesondere parallele Langseiten umfassen. Im eingesetzten Zustand der Hartmetallplatte sind die Langseiten zumindest teilweise von dem Sitz des Bohrerschafts belegt. Die Langseiten sind eben ausgebildet. Des Weiteren ist die quaderförmige Grundform durch zwei sich gegenüberliegende, im wesentlichen axiale freie Kurzseiten, eine dem Sitz zuzuwendende Bodenseite und eine von dem Sitz abzuwendende Schneidstirnseite definiert.

Derartige Hartmetallplatten haben sich in der Praxis aufgrund der einfachen Herstellbarkeit und Montierbarkeit an dem Bohrschaft bewährt. Eine solche Hartmetallplatte ist beispielsweise aus US 3,089,552 bekannt. Die bekannte Hartmetallplatte ist in einem Schlitz am Ende eines Bohrerschafts eingesetzt. In einer Seitenansicht ist die Hartmetallplatte mit einer dachförmigen Schneidstirnseite mit abgeflachter Spitze versehen. Die Schneidkanten liegen an der Längsübergangskante zwischen der Schneidstirnseite und der Langseite, welche Längsübergangskante in Drehrichtung vorläuft. Die Schneidkanten sind über eine mittige Querschneide im abgeflachten Spitzenbereich miteinander verbunden. Die bekannte Hartmetallplatte erstreckt sich radial über den die Hartmetallplatte aufnehmenden Bohrkopf des Bohrerschafts.

Eine Weiterentwicklung der bekannten Hartmetallplatte ist in EP 0 836 919 B1 angegeben. Danach sind beide Dachflanken der Schneidstirnseite der Hartmetallplatte mit Stufenabschnitten versehen, die von einer vorragenden Spitze axial zurückversetzend radial nach außen verlaufen. Durch die Stufenabschnitte werden mehrere zackenartige Eingriffsschneiden gebildet. Bei dieser Maßnahme zum Steigern der Bohreffektivität mittels Erzeugen mehrerer Schneidkanten an der Schneidstirnseite stellte es sich als Nachteil heraus, dass die Standzeit derartiger Hartmetallplatten deutlich reduziert ist.

US 3,080,934 A offenbart einen Bohrer mit Hartmetalleinsätzen.

Aus DE 38 23 409 A1 ist ein Bohrer zur Herstellung von Bohrlöchern mit Hinterschneidung bekannt, bei dem seitlich abstehende Zapfen ein Nachreiben des Bohrlochs bewirken, wodurch Bohrlochtoleranzen vermieden werden.

Es ist Aufgabe der Erfindung, die Nachteile des Stands der Technik zu überwinden, insbesondere eine Hartmetallplatte für einen Gesteinsbohrer mit einer klassischen im wesentlichen quaderförmigen Grundform insbesondere mit dachförmiger Schneidstirnseite dahingehend zu optimieren, dass bei Gewährleistung einer hohen Bohreffektivität die Standzeit der Hartmetallplatte erhöht ist.

Diese Aufgabe wird durch die Merkmale von Anspruch 1 gelöst.

Gemäß einem Aspekt der Erfindung sind beide Kurzseiten der Hartmetallplatte durch einen im wesentlichen ebenen, vorzugsweise rein axialen, bodenseitenfernen Seitenabschnitt und einen bodenseitennahen gestuften Seitenabschnitt mit wenigstens zwei Stufen gebildet, die insbesondere die Hartmetallplatte in Axialrichtung zur Bodenseite radial zurückversetzen.

Es zeigte sich überraschenderweise, dass mit einer Zurückstufung an dem der Schneidstimseite abgewandten Kurzseitenabschnitt der Hartmetallplatte eine verbesserte Bohrmehlabfuhrleistung erzielt wird. Auf diese Weise wird die Bohreffektivität deutlich erhöht, ohne Einbu-βen hinsichtlich der Standzeit der Hartmetallplatte hinnehmen zu müssen. Vorzugsweise verjüngt sich die Hartmetallplatte im axialen Verlauf des gestuften Seitenabschnitts hin zur Bodenseite. Dabei nimmt vorzugsweise die Längsausdehnung der Hartmetallplatte in Radialrichtung hin zur Bodenseite ab. Der gestufte Seitenabschnitt, insbesondere jede Stufe, ist im axialen Verlauf durch eine radiale Sprungfläche und durch eine axiale Podestfläche definiert. Dabei kann die Podestfläche größer als die Sprungfläche sein, insbesondere doppelt oder drei mal so groß wie die Sprungfläche.

Besonders gute Bohrmehlabfuhreigenschaften werden dadurch erreicht, dass die Podestfläche gegenüber der Axialrichtung leicht geneigt ist, insbesondere zwischen 1° bis 20°.

Bei einer bevorzugten Ausbildung der Erfindung kann die Stirnseite im Wesentlichen pyramidisch geformt sein.

Es sei klar, dass die oben genannten Erfindungsaspekte der Hartmetallplatte miteinander kombiniert werden können.

Gemäß einer Weiterbildung der Erfindung werden die beiden Kurzseiten durch einen Axialabschnitt mit einer reinen Axialrichtungskomponente und einem zur Axialrichtung geneigten Konusabschnitt gebildet, so dass sich die im Wesentlichen quaderförmige Hartmetallplatte an der Kurzseite hin zur Bodenseite verjüngt. Dabei sei angemerkt, dass vorzugsweise der reine Axialabschnitt axial linear, also knickfrei, in die Schneidstirnseite übergangslos, kantig mündet, um die Hartmetallplatte an der Schneidstirnseite mit einem Maximum an Hartmetallmaterial zu stärken.

Mit dieser bodenseitigen Konizität der Hartmetallplatte stellte sich eine besonders hohe Bohreffektivität ein. Es zeigte sich, dass die Konizität an der Bodenseite den Abtransport von Bohrmehl günstig beeinflußt. Trotz der vermeintlichen Schwächung an der Bodenseite, sind die Standseiten der Hartmetallplatte ausreichend hoch. Die Hartmetallplatte ist im Bereich der Stirnseite aufgrund des unveränderten Axialabschnitts verstärkt. Überraschenderweise zeigte sich, dass die Konizität einer Bodenseite insofern die Bohreffektivität der Hartmetallplatte steigerte, als eine deutliche Reduzierung der beim Schneiden mit der Hartmetallplatte entwickelnde Bohrwärme erreicht wird. Diese Reduktion der Wärmeentwicklung ergab sich offensichtlich durch eine verminderte Reibung zwischen dem zu bohrenden Material und der Hartmetallplatte, weil mit der Konizität ein wesentlich geringerer Teil der Außenseite der Hartmetallplatte in Eingriff mit dem zu bohrenden Material gebracht ist.

Bei einer bevorzugten Ausführung ist der Konusabschnitt gegenüber der Axialrichtung um weniger als 10°, vorzugsweise um etwa 6°, geneigt, wobei der Neigungswinkel des Axialabschnitts etwa Null ist, bis dieser in die Schneidstirnseite mündet. Auf diese Weise ist die Hartmetallplatte im Hinblick auf die Konizität an der Bodenseite nicht mittensymmetrisch. Mit diesen Neigungen wurde ein optimaler Kompromiß zwischen der Standzeit und einem effektiven Abtransport von Bohrmehl erreicht. Vorzugsweise bildet der Konusabschnitt mehr als die Hälfte, vorzugsweise ein Drittel, der axialen Länge der Kurzseite. Je länger der Konusabschnitt ausgebildet ist, desto stärker wird eine Verstopfung im Bereich der Schneidstirnseite beim Bohren vermieden. Alternativ kann der Axialabschnitt mehr als die Hälfte, vorzugsweise ein Drittel, der Axiallänge der Kurzseite bilden, wodurch die Festigkeit der Hartmetallplatte erhöht ist. Bei einer Weiterbildung der Erfindung ist der Konusabschnitt und der Axialabschnitt konvex gekrümmt und insbesondere durch einen Formknick voneinander getrennt. Auf diese Weise wird die Festigkeit der Hartmetallplatte erhöht.

Bei einer bevorzugten Ausführung der Erfindung ist der Konusabschnitt hin zu den Langseiten facettiert, um auf diese Weise weiter die Reibung zwischen der Hartmetallplatte und dem zu bohrenden Material zu reduzieren.

Besonders gute Abtransporteigenschaften wurden dann erreicht, wenn der Konusabschnitt in Axialrichtung von dem Axialabschnitt hin zur Bodenseite linear verläuft.

Gemäß einer Weiterbildung der Erfindung ist an wenigstens einer Langseite, vorzugsweise an beiden Langseiten, jeweils eine sich in Axialrichtung linear erstreckende, konkave Nut ausgebildet. Die sich axial erstreckende lineare Nut definiert einen örtlich festgelegten Abtransportkanal für Bohrmehl von der Schneidstirnseite. Überraschenderweise stellte sich heraus, dass sich durch die rein axiale lineare Nutführung sehr gute Abtransporteigenschaften ergeben. Eine schraubenförmige Nutführung, die sich in die Wendel des Bohrerschafts erstreckt, ist hierzu nicht notwendig. Die erfindungsgemäße Hartmetallplatte mit verbesserter Bohrmehlabtransporteigenschaft ist aufgrund der Linearität der Abtransportnut sehr einfach und kostengünstig herstellbar.

Vorzugsweise erstreckt sich die Nut unmittelbar von der Schneidstirnseite weg, und die Nut mündet längs des linearen axialen Verlaufs in die Bodenseite. Aufgrund des Konusabschnitts gemäß dem ersten Aspekt der Erfindung kann sich die Nut in Axialrichtung verkleinern.

Besonders gute Eigenschaften hinsichtlich des Bohrmehlabtransports bei Gewährleistung eines aufgezeichneten Sitzes der Hartmetallplatte an dem Bohrerschaft wurden erzielt, wenn die Nut noch auf der Langseite an einem Übergang zwischen der Langseite und der dazu benachbarten Kurzseite ausgebildet ist.

Ein weiterer Erfindungsaspekt betrifft die Schneidstirnseite, die zwei Langschneidkanten aufweisen soll. Die Schneidkanten treffen sich in einem Spitzenbereich und haben jeweils einen spitzenbereichnahen Kantenabschnitt und einen spitzenbereichfernen Kantenabschnitt. Beide Kantenabschnitte sind gegenüber einer zur Axialrichtung senkrechten Radialrichtung geneigt. Erfindungsgemäß ist der spitzenbereichnahe Kantenabschnitt stärker als der spitzenbereichferne Kantenabschnitt geneigt, wobei ein Kantenübergangsbereich zwischen dem spitzenbereichnahen Kantenabschnitt und dem spitzenbereichfernen Kantenabschnitt kontinuierlich konkav gekrümmt ist.

Aufgrund der verschiedenen Neigungen zweier Langschneidkantenabschnitte an der Schneidstirnseite wird eine deutliche Steigerung der Bohreffektivität erreicht. Zusätzlich mit dem kontinuierlich gekrümmten Übergang zwischen den beiden unterschiedlich geneigten Schneidkantenabschnitten wird trotz Erhöhung der Bohreffektivität die Standzeit der Hartmetallplatte nicht oder nur kaum beeinträchtigt.

Bei einer bevorzugten Ausführung der Erfindung bestehen die Langschneidkanten ausschließlich jeweils aus einem linearen spitzenbereichnahen Kantenabschnitt und einem linearen spitzenbereichfernen Abschnitt.

Bei einer Weiterbildung ist der spitzenbereichferne Kantenabschnitt mit etwa 5° bis 20°, vorzugsweise mit etwa 12° oder 13°, gegenüber der zugeordneten Radialrichtung geneigt. Des Weiteren kann der spitzenbereichnahe Kantenabschnitt mit etwa 25° bis 35°, vorzugsweise mit etwa 29°, gegenüber der zugeordneten Radialrichtung mehr als doppelt so stark geneigt sein.

Eine Optimierung der Bohreffektivität wird dann erreicht, wenn der lineare spitzenbereichferne Kantenabschnitt um ein Vielfaches länger als der lineare spitzenbereichnahe Kantenabschnitt ist, vorzugsweise 5 mal, 7 mal, oder 10 mal so lang ist.

Des Weiteren kann die Schneidstirnseite zwei Kurzschneidkanten aufweisen, die sich von der jeweiligen Langseite der Hartmetallplatte in den Spitzenbereich bei gleichbleibender Neigung zur Radialrichtung im Wesentlichen linear erstrecken. Dabei können die Kurzschneidkanten mit etwa 25° bis 35°, vorzugsweise mit etwa 31° oder 32°, gegenüber der zugeordneten Radialrichtung geneigt sein.

Bei einer Weiterbildung der Erfindung trennen die Langschneidkanten zwei zueinander geneigte Stirnflanken, die von einer benachbarten Kurzschneidkante begrenzt sind und entsprechend der relevanten Langschneidkante und Kurzschneidkante geneigt sind.

Vorzugsweise ist der Verlauf der Lang- und/oder Kurzschneidkanten an der Schneidstirnseite punktsymmetrisch zum Spitzenbereich, den eine Drehachse der Hartmetallplatte kreuzen kann.

Bei einem weiteren Aspekt der Erfindung ist die gattungsgemäße Hartmetallplatte dadurch weitergebildet, dass bei axialer Projektionsbetrachtung zwei sich linear von einem gemeinsamen Spitzenbereich radial nach außen erstreckende Langschneidkanten, die in einem linearen Verlauf in die jeweilige Kurzseite der Hartmetallplatte münden, zu einer ebenen Radialerstreckung der zueinander parallelen Langseiten der Hartmetallplatte in einem nicht vernachlässigbaren Winkel größer als 1° und kleiner als 10° geneigt sind. Vorzugsweise sind die Langschneidkanten zur ebenen Radialerstreckung der Langseiten mit 5° oder 6° geneigt. Auf diese Weise kann überraschenderweise die Standzeit sowie die Bohreffektivität der Hartmetallplatte erhöht werden.

Des weiteren betrifft die Erfindung einen Gesteinsbohrer mit einem Bohrerschaft, dessen eines Ende in einem Bohrgerät fest einsetzbar ist, dessen anderes Ende einen Sitz zum festen Aufnehmen einer erfindungsgemäßen Hartmetallplatte aufweist. Vorzugsweise ist die sich in Axialrichtung linear erstreckende, konkave Nut der Hartmetallplatte von Halteflanken des Sitzes des Bohrerschafts unbelegt. Die Hartmetallplatte ist derart dimensioniert, dass sie zumindest im Bereich der Schneidstirnseite insbesondere auf axialer Höhe des Axialabschnitts radial über dem Bohrerschaft vorsteht. Vorzugsweise ist ein Übergang zwischen der Hartmetallplatte und dem Bohrerschaft auf axialer Höhe der Bodenseite der Hartmetallplatte in Radialrichtung kontinuierlich, insbesondere absatzfrei. Alternativ kann der Übergang zwischen der Hartmetallplatte und dem Bohrerschaft in Radialrichtung einen Absatz bilden.

Weitere Vorteile, Eigenschaften und Merkmale der Erfindung werden durch die folgende Beschreibung bevorzugter Ausführungen der Erfindung anhand der beiliegenden Zeichnungen deutlich, in denen zeigen:
- Figur 1a: eine Langseitenansicht einer Hartmetallplatte;
- Figur 1b: eine Kurzseitenansicht der Hartmetallplatte gemäß Figur 1;
- Figur 1c: eine Schneidstirnseitenansicht der Hartmetallplatte gemäß den Figuren 1a und 1b;
- Figur 1d: eine Seitenansicht des Gesteinsbohres;
- Figur 1e: eine Detailansicht A des Gesteinsbohrers gemäß Figur 1d;
- Figur 2a: eine perspektivische Ansicht einer Hartmetallplatte;
- Figur 2b: eine Langseitenansicht der Hartmetallplatte gemäß Figur 2a;
- Figur 2c: eine Kurzseitenansicht der Hartmetallplatte gemäß den Figuren 2a und 2b;
- Figur 2d: eine Stirnseitenansicht der Hartmetallplatte gemäß den Figuren 2a bis 2c;
- Figur 2e: eine Seitenansicht des Gesteinsbohrers mit der Hartmetallplatte gemäß den Figuren 2a bis 2d;
- Figur 2f: eine Detailansicht A gemäß Figur 2e.
- Figur 3a: eine Seitenansicht eines Gesteinsbohrers mit einer Hartmetallplatte;
- Figur 3b: eine Detailansicht A gemäß Figur 3a;
- Figur 4a: eine Seitenansicht eines erfindungsgemäßen Gesteinsbohrers mit einer Hartmetallplatte; und
- Figur 4b: eine Detailansicht A gemäß Figur 4a.

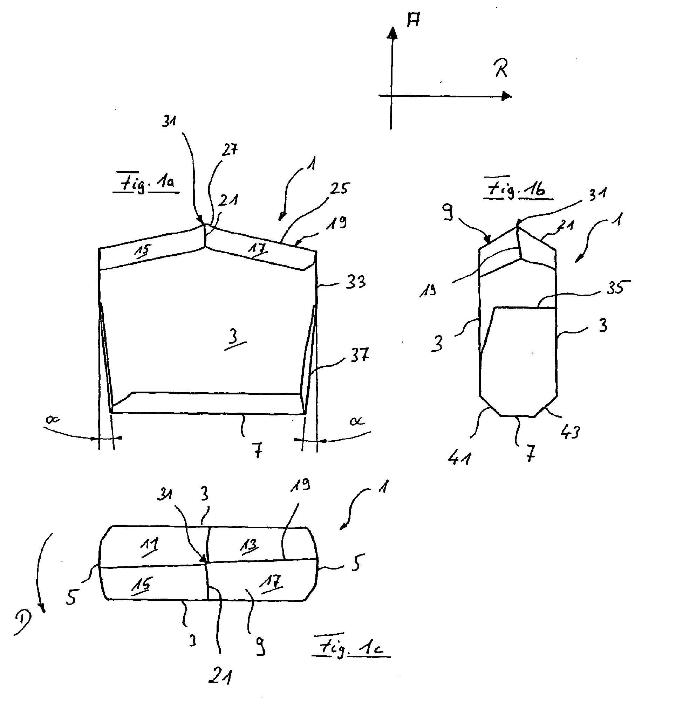

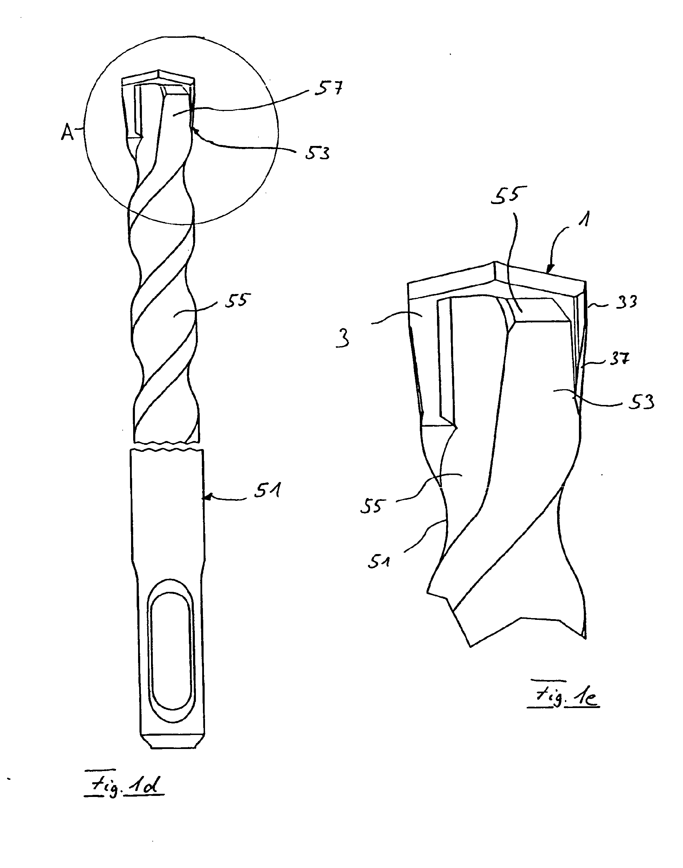

In Figur 1 ist die Hartmetallplatte im Allgemeinen mit der Bezugsziffer 1 versehen. Die Hartmetallplatte 1 hat eine im Wesentlichen quaderförmige Grundstruktur, wie insbesondere in Figur 1c und 1b ersichtlich ist. Die im Wesentlichen quaderförmige Grundform soll wenigstens durch zwei zueinander parallele, sich gegenüberliegende Langseiten 3 mit ebenen Seitenflächen und durch zwei sich gegenüberliegende Kurzseiten 5 mit leicht konvex gekrümmten Seitenflächen definiert sein. Eine Bodenseite 7, die orthogonal sowohl zu den Kurzseiten 5 als auch zu den Langseiten 3 ist, und eine bei Seitenansicht im wesentlichen dachförmige Stirnseite 9 liegen sich gegenüber und haben bei axialer Projektion die gleiche radiale Ausdehnung.

Die Stirnseite 9 hat bei dreidimensionaler Betrachtung eine im wesentlichen pyramidische Form mit vier flächigen Schneidflankenabschnitten 11 bis 17, die jeweils durch die Langseite 3, die Kurzseite 5, eine Hauptschneidkante 19 und eine Kurzschneidkante 21 begrenzt sind.

Wie in Figur 1a gezeigt ist, ist der stirnseitige Bereich der Hartmetallplatte 1 dachförmig ausgebildet, wobei die Hauptschneide 19 einen kurzseitennahen, linearen Kantenabschnitt 25 sowie einen kurzseitenfernen linearen, kürzeren Kantenabschnitt 27 aufweist. Die Neigung des kurzseitenfernen Kantenabschnitts 27 gegenüber einer Radialrichtung R ist deutlich stärker als die Neigung des kurzseitennahen Kantenabschnitts 25. Der Neigungswinkel zwischen dem kurzseitenfernen Kantenabschnitt 27 und der Radialrichtung R liegt bei etwa 29°, während der Neigungswinkel des kurzseitennahen Kantenabschnitts 25 bei etwa 13° liegt.

Der Übergang zwischen dem kurzseitenfernen Kantenabschnitt 27 und dem kurzseitennahen Kantenabschnitt 25 ist kontinuierlich konkav gekrümmt, um eine Kante zu bilden, wie in Figur 1a gezeigt ist.

Die Langschneidkante 19 kreuzt die Kurzschneidkante 21 in einem Spitzenbereich 31. Die Kurzschneidkante 21 ist abschnittsweise leicht gekrümmt, so dass bei Betrachtung beider Kurzschneidkantenabschnitte eine leichte S-Form identifizierbar ist. Hingegen erstreckt sich die Langschneidkante 19 von der jeweiligen Kurzseite 5 zum Spitzenbereich 31 bei axialer Projektionsbetrachtung linear und setzt sich zu der gegenüberliegenden Kurzseite 5 linear und leicht versetzt fort.

Die Kurzseite 5 hat im Verlauf der Axialrichtung A von der Stirnseite 9 einen Axialabschnitt 33, der im wesentlichen ein Drittel der Gesamtaxiallänge der Kurzseite 5 ausmacht. An den Axialabschnitt 33 schließt unter Ausbildung einer Übergangskante 35 einen Konusabschnitt 37 an, der im wesentlichen zwei Drittel der Gesamtaxiallänge der Kurzseite 5 ausmacht. Der Konusabschnitt 37 verläuft in Axialrichtung A im Wesentlichen linear und bildet einen Winkel α von etwa 6° gegenüber der Axialrichtung A.

Die Bodenseite 7 hat zwei ein Drittel der Gesamtbreite der Bodenseite 7 ausmachende Phasen 41, 43 mit einem Winkel von etwa 45° zur Bodenseite, was das Einsetzen der Hartmetallplatte 1 in einen Schlitz in einem Bohrkopf eines Bohrschafts 51 (siehe Figur 1 d) erleichtert.

In den Figuren 1d und 1e ist die Hartmetallplatte 1 in den Schlitz am Bohrkopf 53 des Bohrerkopfs 51 eingesetzt dargestellt.

Wie ersichtlich ist, geht die Hartmetallplatte 1 kontinuierlich übergangs- und absatzfrei in den Bohrerschaft 51 über. Die spiralförmige Wendelnut 55 des Bohrerschafts 51 läuft am Bohrkopf 53 linear aus. Der Bohrkopf 53 umfaßt zwei gegenüberliegende schlitzbildende Flanken 57 mit parallelen Innenflächen (nicht näher dargestellt), die größtenteils die Langseiten 3 der Hartmetallplatte 1 flächig berührend bedecken. Die Hartmetallplatte 1 steht im Verlauf des Konusabschnitts 37 und am Axialabschnitt 33 radial über die Radialabmessung des Bohrerschafts 51 vor.

Wie in Figur 1c ersichtlich ist, erstreckt sich die Langschneidkante 19 im Wesentlichen in einer Radialrichtung R. Allerdings erstreckt sich die Hauptschneidkante 19 nicht parallel zu der Radialerstreckung der Langseite 3, sondern ist dazu leicht geneigt. Auf diese Weise werden die nachlaufenden Schneidflankenabschnitte 11, 17 bei Betrachtung einer Drehrichtung D stärker ausgeführt als die nachlaufenden Schneidflankenabschnitte 13, 15.

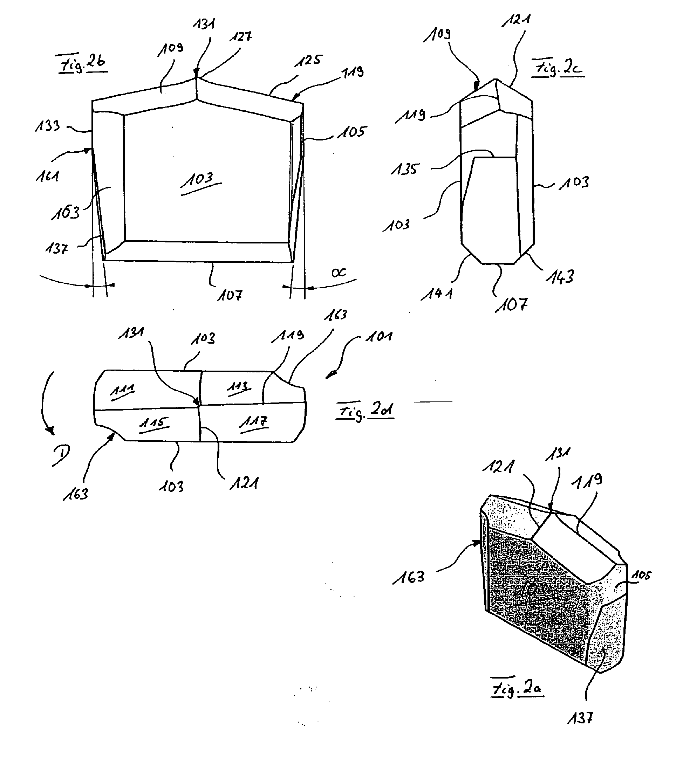

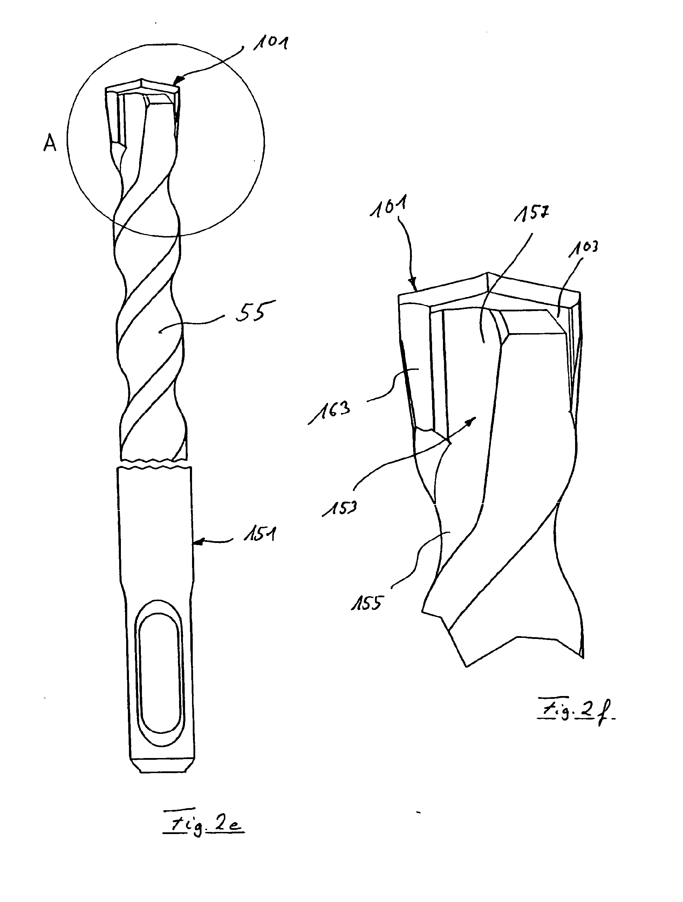

In den Figuren 2a bis 2f ist eine weiteren Hartmetallplatte für einen Gesteinsbohrer dargestellt, wobei zur besseren Lesbarkeit der Figurenbeschreibung für identische und ähnliche Bestandteile der Hartmetallplatte und des Gesteinsbohrers gemäß den Figuren 2a bis 2f identische Bezugszeichen der Ausführung gemäß den Figuren 1a bis 1e verwendet werden, die im 100 erhöht sind.

Die in den Figuren 2a bis 2f gezeigte Hartmetallplatte 101 unterscheidet sich von der Hartmetallplatte 1 gemäß den Figuren 1a bis 1f darin, dass an dem in Drehrichtung D vorlaufenden Randbereich 161 der Langseite 103 eine axiale Nut 163 ausgebildet ist, die sich von der Stirnfläche 109 axial hin zur Bodenseite 107 linear erstreckt. Die Nut 163 ist konkav gekrümmt und nimmt etwa 1/6 der Breite der Langseite 103 der Hartmetallplatte 101 ein. Im Bereich des Axialabschnitts 133 der Kurzseite 105 hat die Nut 163 eine konstante Breite, die am Konusabschnitt 137 hin zur Bodenseite 107 entsprechend der Konizität abnimmt. Ein Übergang zwischen der Nut 163 und dem Konusabschnitt 137 kann kantig ausgebildet sein, wobei alternativ dieser Übergang auch ohne harte Kante entsprechend abgerundet formkontinuierlich ausgebildet sein kann.

Die Nut 163 dient dazu, das beim Schneiden von Gestein erzeugte Bohrmehl von der Schneidzone axial hin zu dem Bohrschaft 151, insbesondere zur Bohrmehlnut 155, abzutransportieren.

Wie in Figur 2f ersichtlich ist, mündet die Nut 163 in die Bohrmehlnut 155 kontinuierlich. Des weiteren ist in Figur 2f ersichtlich, dass die Schlitzflanke 157 des Bohrkopfs 157 annährend die gesamte flache Seite 103 belegt, wobei die Nut 163 von der Schlitzflanke 157 unbelegt bleibt, damit ein ungehinderter Abtransport von Bohrmehl von der axialen Nut 163 hin zur Wendelnut 155 sichergestellt ist.

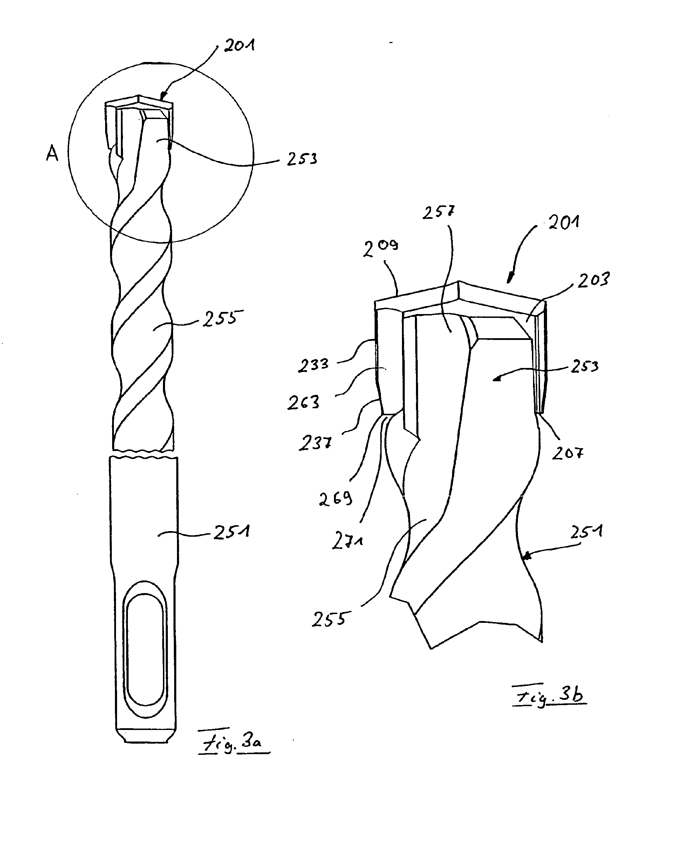

In den Figuren 3a und 3b ist eine weiteren Hartmetallplatte für einen Gesteinsbohrer dargestellt, wobei zur besseren Lesbarkeit der Figurenbeschreibung für identische und ähnliche Bestandteile der Hartmetallplatte und des Gesteinsbohrers die gleichen Bezugsziffern wie in den Ausführungen der Figuren 1a bis 1e bzw. 2a bis 2f verwendet werden, die um 200 bzw. 100 erhöht sind.

Die Hartmetallplatte 201 unterscheidet sich von der Hartmetallplatte 101 gemäß den Figuren 2a bis 2f darin, dass der Axialabschnitt 233 im wesentlichen 2/3 der Gesamtlänge der Kurzseite 205 ausmacht. Dagegen nimmt der Konusabschnitt 237 nur etwa 1/3 der Axiallänge der Kurzseite 205 in Anspruch. Aufgrund dieser gegenüber der Ausführung gemäß den Figuren 2a bis 2f abgeschwächten Konizität bildet sich ein Absatz 269 an der Bodenseite 7, der einen im wesentlichen dreieckigen Zwischenraum 271 zwischen dem Bohrerschaft 251 und der Bodenseite 207 der Hartmetallplatte 201 definiert.

Der sprunghafte Übergang zwischen der Hartmetallplatte 201 und dem Bohrerschaft 251 fördert beim Bohrvorgang die Abfuhr des Bohrmehls von der Stirnseite 209 weg hin zur Bohrmehlnut 255. Der keilförmige Zwischenraum 251 erzeugt dabei eine Pumpwirkung, welche zusätzlich die Bohrmehlnut von der Nut 263 in die Bohrmehlnut 255 des Bohrerschaft 251 befördert.

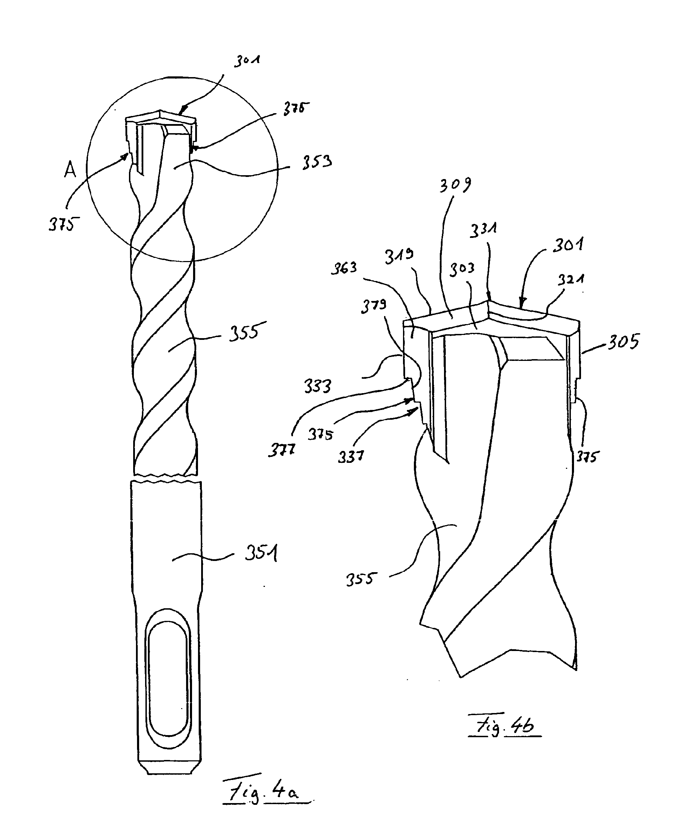

In den Figuren 4a und 4b ist eine bevorzugte Ausführung der erfindungemäßen Hartmetallplatte für einen Gesteinsbohrer gezeigt, wobei zur besseren Lesbarkeit der Figurenbeschreibung für identische und ähnliche Bestandteile der Hartmetallplatte gleiche Bezugsziffern gegenüber den Ausführungen gemäß den Figuren 1a bis 1e bzw. 2a bis 2f bzw. 3a und 3b verwendet werden, die um 300 bzw. 200 bzw. 100 erhöht sind.

Die Hartmetallplatte 301 unterscheidet sich von den Hartmetallplatten 201 und 101 darin, dass sich der Axialabschnitt 333 annähernd über die Hälfte der axialen Länge der Kurzseite 305 der Hartmetallplatte 301 erstreckt. Der Konusabschnitt 337 wird dadurch verwirklicht, dass eine Stufenanordnung 375 mit mindestens drei Stufen geformt werden, durch den drei radiale Sprungflächen 377 und drei Axialpodeste 379 definiert sind. Der Axialpodest 379 ist gegenüber der Axialrichtung A leicht geneigt.

Die Stufenstruktur am Konusabschnitt 337 erleichtert den Abtransport von Bohrmehl von der Stirnseite 109 der Hartmetallplatte 101.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

| | |
|---|---|
| 1, 101, 201, 301 | Hartmetallplatte |
| 3, 103, 203, 303 | Langseiten |
| 5, 105, 205, 305 | Kurzseiten |
| 7, 107, 207, 307 | Bodenseite |
| 9, 109, 209, 309 | Stirnseite |
| 11 bis 17, 111 bis 117, 211 bis 217, 311 bis 317 | Schneidflankenabschnitte |
| 19, 119, 219, 319 | Hauptschneidekante |
| 21, 121, 221, 321 | Kurzschneidekante |
| 25, 125, 225, 325 | kurzseitennaher Kantenabschnitt |
| 27, 127, 227, 327 | kurzseitenferner Kantenabschnitt |
| 31, 131, 231, 331 | Spitzenbereich |
| 33, 133, 233, 333 | Axialabschnitt |
| 35, 135, 235, 335 | Übergangskante |
| 37, 137, 237, 337 | Konusabschnitt |
| 41,43,141,143,241,243,341,343 | Phasen |
| 51, 151, 251, 351 | Bohrschaft |
| 53,153,253,353 | Bohrkopf |
| 55,155,255 | Wendelnut |
| 57, 157, 257, 357 | Schlitzflanke |
| 161, 162, 362 | Randbereich |
| 163, 263 | Bohrmehlnut |
| 269 | Absatz |
| 375 | Stufenanordnung |
| 377 | Radialsprünge |
| 379 | Axialpodeste |
| A | Axialrichtung |
| R | Radialrichtung |
| α | Winkel |

## Patentansprüche

1. Hartmetallplatte zum Einsetzen in einen an einem Ende eines Bohrerschafts (351) eines Gesteinsbohrers ausgebildeten Sitz, umfassend eine im wesentlichen quaderförmige Grundform mit zwei sich in Axialrichtung (A) des Bohrerschafts (351) erstreckenden und gegenüberliegenden Langseiten (303), die zumindest teilweise von dem Sitz zu belegen sind, zwei sich gegenüberliegenden im wesentlichen axialen, freien Kurzseiten, einer dem Sitz zuzuwendenden radialen Bodenseite (307) und einer von dem Sitz abzuwendenden Schneidstirnseite (309), **dadurch gekennzeichnet, dass** beide Kurzseiten (305) durch einen im wesentlichen ebenen, bodenseitenfemen Seitenabschnitt und einen, bodenseitennahen gestuften Seitenabschnitt mit wenigstens zwei Stufen gebildet sind, und sich die Hartmetallplatte im axialen Verlauf des gestuften Seitenabschnitts hin zur Bodenseite (307) verjüngt.

2. Hartmetallplatte nach Anspruch 1, deren Längsausdehnung in Radialrichtung (R) hin zur Bodenseite (307) abnimmt.

3. Hartmetallplatte nach Anspruch 1 oder 2, bei der der gestufte Seitenabschnitt im axialen Verlauf eine radiale Sprungfläche (377) und eine axiale Podestfläche (379) aufweist, wobei insbesondere die Podestfläche größer als die Sprungfläche (377), insbesondere doppelt oder drei mal so groß wie die Sprungfläche (377), ist, wobei insbesondere die Podestfläche (379) gegenüber der Axialrichtung leicht geneigt ist, insbesondere zwischen 1° bis 20°.

4. Hartmetallplatte nach einem der Ansprüche 1 bis 3, bei der die Stirnschneidseite (309) im Wesentlichen pyramidisch geformt ist.

5. Hartmetallplatte nach einem der Ansprüche 1 bis 4, bei der die Kurzseiten (5, 105, 205, 305) einen Axialabschnitt (33, 133, 233, 333) mit einer rein axialen Richtungskomponente und einen zur Axialrichtung geneigten Konusabschnitt (37, 137, 237, 337) aufweisen, so dass sich die im wesentlichen quaderförmige Hartmetallplatte (1, 101, 201, 301) an der Kurzseite (5, 105, 205, 305) hin zur Bodenseite (7, 107, 207, 307) verjüngt.

6. Hartmetallplatte nach einem der Ansprüche 1 bis 5, bei der an wenigstens einer Langseite (103, 203, 303), vorzugsweise jeweils an beiden Langseiten (103, 203, 303), eine sich in Axialrichtung (A) linear erstreckende, konkave Nut (163, 263, 363) ausgebildet ist.

7. Hartmetallplatte nach einem der Ansprüche 1 bis 6, bei der die Schneidstirnseite (9, 109, 209, 309) zwei Langschneidkanten (19, 119, 219, 319) aufweist, die sich in einem Spitzenbereich (31, 131, 231, 331) treffen und jeweils einen spitzenbereichnahen Kantenabschnitt und einen spitzenbereichfernen Kantenabschnitt aufweisen, wobei beide Kantenabschnitte gegenüber einer zur Axialrichtung (A) senkrechten Radialrichtung (R) geneigt sind, wobei der spitzenbereichnahe Kantenabschnitt stärker als der spitzenbereichferne Kantenabschnitt geneigt ist und ein Übergangsbereich zwischen dem spitzenbereichnahen Kantenabschnitt und dem spitzenbereichfemen Kantenabschnitt kontinuierlich konkav gekrümmt ist.

8. Hartmetallplatte nach einem der Ansprüche 1 bis 7, bei der zwei sich linear von einem gemeinsamen Spitzenbereich (31, 131, 231, 331) radial nach außen erstreckende Langschneidkanten (19, 119, 219, 319), die in einem linearen Verlauf in die jeweilige Kurzseite (5, 105, 205, 305) münden, zu einer ebenen Radialerstreckung (R) der zueinander parallel Langseiten (3, 103, 203, 303) in einem Winkel größer als 1° und kleiner als 10°, vorzugsweise bei etwa 5° oder 6°, geneigt sind.

9. Gesteinbohrer mit einem Bohrerschaft (51, 151, 251, 351), dessen eines Ende in einem Bohrgerät einsetzbar ist und dessen anderes Ende einen Sitz zum Aufnehmen einer nach einem der Ansprüche 1 bis 8 ausgebildeten Hartmetallplatte (1, 101, 201, 203) bildet.

10. Gesteinsbohrer nach Anspruch 9, bei dem eine sich in Axialrichtung (A) linear erstreckende, konkave Nut (63, 163, 263, 363) von dem Sitz des Bohrerschafts (51, 151, 251, 351) unbelegt ist.

## Claims

1. A carbide plate for insertion into a seat formed at one end of a drill shank (351) of a rock drill, comprising an essentially square basic shape with two opposing longitudinal sides (303) extending in the axial direction (A) of the drill shank (351), which have to be at least partially covered by the seat, two opposing, essentially axial, free short sides, a radial floor side (307) to be facing the seat, and a cutting face (309) to be facing away from the seat, **characterized in that** both short sides (305) are formed by an essentially flat lateral section far away from the floor side, and a tiered lateral section near to the floor side with at least two steps, and that the carbide plate tapers toward the floor side (307) in the axial progression of the tiered lateral section.

2. The carbide plate according to claim 1, the longitudinal extension of which tapers in a radial direction (R) toward the floor side (307).

3. The carbide plate according to claim 1 or 2, in which the tiered lateral section exhibits a radial jumping surface (377) and an axial pedestal surface (379) in the axial progression, wherein in particular the pedestal surface is larger than the jumping surface (377), in particular two or three times as large as the jumping surface (377), wherein in particular the pedestal surface (379) is slightly inclined relative to the axial direction, in particular between 1° and 20°.

4. The carbide plate according to one of claims 1 to 3, in which the cutting face (309) is essentially pyramidal.

5. The carbide plate according to one of claims 1 to 4, in which the short sides (5, 105, 205, 305) exhibit an axial section (33, 133, 233, 333) with a purely axial directional component and a cone section (37, 137, 237, 337) inclined relative to the axial direction, so that the essentially square carbide plate (1, 101, 201, 301) tapers on the short side (5, 105, 205, 305) toward the floor side (7, 107, 207, 307).

6. The carbide plate according to one of claims 1 to 5, in which a concave groove (163, 263, 363) linearly extending in the axial direction (A) is formed on at least one longitudinal side (103, 203, 303), preferably on both respective longitudinal sides (103, 203, 303).

7. The carbide plate according to one of claims 1 to 6, in which the cutting face (9, 109, 209, 309) exhibits two longitudinal cutting edges (19, 119, 219, 319), which converge in a peak region (31, 131, 231, 331), and each exhibit an edge section near to the peak region and an edge section far away from the peak region, wherein both edge regions are inclined relative to a radial direction (R) perpendicular to the axial direction (A), wherein the edge section near to the peak region is more strongly inclined than the edge section far away from the peak region, and a transitional area between the edge section near to the peak region and the edge section far away from the peak region is continuously and concavely curved.

8. The carbide plate according to one of claims 1 to 7, in which two longitudinal cutting edges (19, 119, 219, 319) extending linearly from a shared peak region (31, 131, 231, 331) in a radially outward manner, which follow a linear progression and end in the respective short side (5, 105, 205, 305), are inclined toward a flat radial extension (R) of the mutually parallel longitudinal sides (3, 103, 203, 303) at an angle greater than 1° and less than 10°, preferably at about 5° or 6°.

9. A rock drill with a drill shank (51, 151, 251, 351), one end of which can be inserted into a drill, and the other end of which forms a seat for accommodating a carbide plate (1, 101, 201, 301) designed according to one of claims 1 to 8.

10. The rock drill according to claim 9, in which a concave groove (63, 163, 263, 363) extending linearly in an axial direction (A) is not covered by the seat of the drill shank (51, 151, 251, 351).

## Revendications

1. Plaquette carbure à insérer dans un siège constitué à une extrémité d'une tige de forage (351) d'un foret à pierre, présentant une forme de base sensiblement quadrangulaire avec deux côtés longs (303) opposés s'étendant dans le sens axial (A) de la tige de forage (351) et qui sont destinés à être au moins partiellement occupés par le siège, deux côtés courts opposés libres sensiblement axiaux, un côté de fond radial (307) à tourner vers le siège (309) et un coté front de coupe (309) à détourner du siège, **caractérisée en ce que** les deux côtés courts (305) sont constitués par une section latérale sensiblement plane éloignée du fond et une section latérale échelonnée proche du fond et présentant au moins deux échelons et que la plaquette carbure se rétrécit dans l'extension axiale de la section latérale échelonnée en direction du côté de fond (307).

2. Plaquette carbure selon la revendication 1, dont l'extension longue se réduit dans le sens radial (R) en direction du côté de fond (307)

3. Plaquette carbure selon la revendication 1 ou 2, dans laquelle la section latérale échelonnée présente en extension axiale une surface de saut radiale (377) et une surface de pied axiale (379), la surface de pied étant supérieure à la surface de saut (377), représentant en particulier le double ou le triple de la surface de saut (377), la surface de pied (379) étant en particulier légèrement inclinée par rapport au sens axial, en particulier de 1° à 20°.

4. Plaquette carbure selon une des revendications 1 à 3, dans laquelle le côté front de coupe (309) a sensiblement une forme pyramidale.

5. Plaquette carbure selon une des revendications 1 à 4, dans laquelle les côtés courts (5, 105, 205, 305) présentent une section axiale (33, 133, 233, 333) ayant une composante de sens purement axiale et une section conique (37, 137, 237, 337) inclinée par rapport au sens axial, de sorte que la plaquette carbure (1, 101, 201, 301) sensiblement de forme quadrangulaire se rétrécit en direction du côté de fond (7, 107, 207, 307).

6. Plaquette carbure selon une des revendications 1 à 5, dans laquelle, sur au moins un côté long (103, 203, 303), de préférence respectivement sur les deux côtés longs (103, 203, 303), une rainure concave (163, 263, 363) s'étendant linéairement dans le sens axial (A) est constituée.

7. Plaquette carbure selon une des revendications 1 à 6, dans laquelle le côté front de coupe (9, 109, 209, 309) présente deux arêtes de coupe longues (19, 119, 219, 319) qui se rejoignent au niveau d'une pointe (31, 131, 231, 331) et présentent respectivement une section d'arête proche de la pointe et une section d'arête éloignée de la pointe, les deux sections d'arête étant inclinées par rapport à un sens radial (R) perpendiculaire au sens axial (A), la section d'arête proche de la pointe étant plus fortement inclinée que la section d'arête éloignée de la pointe et une zone de transition entre la section d'arête proche de la pointe et la section d'arête éloignée de la pointe présentant une courbure concave continue.

8. Plaquette carbure selon une des revendications 1 à 7, dans laquelle deux arêtes de coupe longues (19, 119, 219, 319) s'étendant linéairement radialement vers l'extérieur depuis une pointe commune (31, 131, 231, 331) et qui débouchent en extension linéaire dans le côté court respectif (5, 105, 205, 305) sont inclinées par rapport à une extension radiale plane (R) des côtés longs mutuellement parallèles (3, 103, 203, 303) sont inclinées suivant un angle supérieur à 1° et inférieur à 10°, de préférence d'environ 5° ou 6°.

9. Foret à pierre équipé d'une tige de forage (51, 151, 251, 351) dont une extrémité est insérable dans une foreuse et dont l'autre extrémité forme un siège destiné à recevoir une plaquette carbure (1, 101, 201, 203) réalisée selon une des revendications 1 à 8.

10. Foret à pierre selon la revendication 9, dans lequel une rainure concave (63, 163, 263, 363) s'étendant linéairement dans le sens axial (A) n'est pas occupée par le siège de la tige de forage (51, 151, 251, 351).
